# EUROPEAN PATENT APPLICATION

(11) **EP 2 273 001 A1**
(43) Date of publication of application: **12.01.2011**
(21) Application number: 10173344.2
(22) Date of filing: 19.08.2010
(51) Int. Cl.: D02G 3/06, D02G 3/44, B29C 55/18, D01D 5/42, E01C 13/08

(54) **Yarn for artificial turf**

(30) Priority: 19.08.2009 EP 09168135
(71) Applicant: Colbond B.V., 6827 AV Arnhem (NL)
(72) Inventor: Van Vliet, Arie Hendrik Frans, 6814 JH, Arnhem (NL)
(74) Representative: Oberlein, Gerriet H. R.

(57) **Abstract**

A yarn, especially suitable for artificial turf, which comprises non-drawn polymer and a process for producing such yarns. The process comprises the steps of inserting a polymer melt between two calendar rolls from the top, the two calendaring rolls are pressed together while rotating, the polymer melt is pressed together and cooled by the contact with the calendar rolls to form a non-drawn continuous sheet. Subsequently, the non-drawn continuous sheet is cut into separate yarns and the yarns can be wound up.

## Description

The invention pertains to a process for producing yarns, especially suitable for artificial turf, comprising non-drawn polymer and for producing yarns with a non-rectangular cross section or with a cross section which varies in shape or size along the length of the yarn.

Yarns for artificial turf are normally produced by extruding monofilaments, orienting the extruded monofilaments in a stretching process and winding the oriented monofilaments onto bobbins. This process allows almost any cross-section to be produced which however is always constant in size and shape along the length of the yarn.

Alternatively, yarns for artificial turf can be produced by extruding a film, orienting the extruded film and cutting the film into separate yarns which are wound up. This method produces exclusively yarns, called tapes, with a constant rectangular cross-section.

For both prior art processes it is essential, in order to control the process, that a certain tension is applied in the production process resulting in a yarn comprising drawn polymer which exhibits a certain level of orientation. This orientation in the polymer increases the bending stiffness of the yarn, but reduces the resilience of the yarn which is one of the major requirements of artificial turf yarns.

In the prior art processes it is only possible to apply a texture on the surface of the yarns if an additional calendaring step is introduced in the film extrusion process. In the extruded monofilament process it is not possible to apply a texture on the surface of the yarn.

Characteristic for a natural turf field is the random nature of the field. In practice it is extremely difficult to simulate the appearance of natural grass in artificial turf unless special measures are taken. Methods used to obtain a random nature in artificial turf are combining and twisting of several yarns into one bundle and mixing yarns with different colors.

A new yarn and a new process to produce yarns are proposed to overcome at least some of the disadvantages of the prior art.

The inventive process comprises the steps of inserting a polymer melt between two calendar rolls from the top, the two calendaring rolls, preferably made of hard steel, are pressed together while rotating, the polymer melt is pressed together and cooled by the contact with the calendar rolls to form a non-drawn continuous sheet. Subsequently, the non-drawn continuous sheet is cut into separate yarns and the yarns can be wound up. In this process no significant orientation is obtained in the resulting non-drawn continuous polymer sheet which makes it possible to produce a yarn, especially suitable for artificial turf, comprising non-drawn polymer. Using this process almost any thermoplastic polymer can be processed into yarns.

The polymer in the continuous sheet should be cooled down below the glass transition temperature of the polymer as quickly as possible to prevent that the continuous sheet is drawn by tensions in the process. The calendar rolls should be cold enough to cool down the polymer melt below its glass transition temperature (Tg). Cooling the calendar rolls to a temperature low enough to enable cooling of the polymer melt to a temperature below its Tg is not always easy, especially at high production speeds. To make processing more simple and reliable and to enable high production speeds, the calendar rolls are preferably immersed in a cooling medium, most preferably up to the centre line of the calendar rolls, and the resulting continuous sheet is fed directly down into the cooling medium to be cooled down further to ensure that a non-drawn continuous sheet is obtained. The cooling medium is preferably water, most preferably water of ambient temperature.

The non-drawn or almost non-drawn yarns improve the resilience of artificial turf. Upon loading, for example a load exerted by a sliding of a player in a football match or by bending the yarn under a football shoe, conventional artificial turf yarns are often elongated beyond their yield point which results in a permanent deformation of the yarn. The (almost) non-drawn yarns according to the invention will have a lower tendency to exhibit permanent deformation as the yarns are less likely to reach their yield point.

Furthermore, thermoplastic elastomeric materials can now be used which are too soft for the prior art film extrusion process to produce tapes.

After cutting the non-drawn continuous sheet into separate yarns or tapes, the separate yarns or tapes can be fibrillated to imitate the appearance of natural grass in artificial turf even better. Fibrillated yarns or tapes are softer and easier to twist compared to non-fibrillated yarns or tapes. Fibrillation is to be understood to mean that additional cuts are made in the yarn or tape in the longitudinal direction of the yarn or tape. The additional cuts are of a limited length, preferably in the range of 5 to 40 mm.

Fibrillation of the yarns can be achieved by one or more rolls containing pins protruding outwardly from its surface. The pins protrude either under an angle or perpendicular to the surface of the roll. When the pins protrude under an angle from the surface of the roll, the pins preferably are placed under an angle of 5° to 45°, more preferably 10° to 30°, perpendicular to the surface of the roll while being inclined against the direction of production of the yarns or tapes. If the angle is too large, yarns or tapes may tear or even break, especially for more elastic yarns or tapes. If the angle is too small the pins will not penetrate the yarns or tapes.

Preferably, the roll contains 3 to 20 pins per cm². The pins can be distributed over the surface of the roll in numerous different patterns, for example in a staggered pattern, in a square pattern, wherein four pins form the corners of a square or rectangle with two of its sides in parallel to the rolls axis and the other two sides perpendicular to the rolls axis, i.e. in the production direction of the yarns or tapes, in a slanted pattern, wherein four pins form the corners of a parallogram, or in a random pattern. Additionally, the width of the pattern may vary over the width of roll to obtain fibrils of different widths within a single yarn or tape.

The roll rotates such that the pins move in the same direction as the yarns or tapes. The rotational speed of the roll is relatively high such that the tangential speed at which the pins are displaced is equal to or higher than the production speed of the yarns or tapes. The rotational speed of the roll and the distribution of the pins per cm² determine the fibrillation pattern and also the appearance and mechanical properties of the fibrillated yarns or tapes.To improve the quality of the fibrillation pattern, for example to obtain a cleaner cut, less hairiness, a more consistent fibril width and a smooth surface with no drags or dust, and in order to be able to fibrillate yarns or tapes with other characteristics, such as for example yarns or tapes with a low draw ratio or even non-drawn yarns or tapes, or yarns or tapes with a thickness in excess of 130 µm, the fibrillation is preferably achieved by knives or blades instead of pins by utilizing one or more rolls containing a multitude of knives. The roll rotates such that the knives move in the same direction as the yarns or tapes. The rotational speed of the roll is relatively high such that the tangential speed at which the knives are displaced is equal to or higher than the production speed of the yarns or tapes.

The roll or rolls can comprise a series of parallel oriented circular knives, wherein one or more parts of the circumference of the circular knives is either flattened or cut out to produce cuts of limited length in the yarns or tapes. The number of flattened or cut out parts in the circumference of the circular knives depends of the desired length of the additional cuts in the yarns or tapes. The length of the additional cuts is defined by the length of the sections of the circumference of the circular knives, which are not flattened or cut out, in relation to the ratio of the rotational speed of the roll containing the circular knives and the production speed of the yarns or tapes. The number of additional cuts over the width of the yarns or tapes is defined by the spacing of the knives over the width of the roll or rolls.

Alternatively, separate blades can be mounted on the roll or rolls instead of using circular knives. The blades protrude either under an angle or perpendicular to the surface of the rolls. The cutting edges of the blades are aligned parallel to the production direction of the yarns or tapes, i.e. perpendicular to the rolls axis. When the blades protrude under an angle from the roll of the surface, the blades are preferably placed under an angle of 5° to 45°, more preferably 10° to 30°, perpendicular to the surface of the roll while being inclined against the direction of production of the yarns or tapes. The blades can be distributed over the surface of the roll in numerous different patterns, for example in a staggered pattern, in a square pattern, wherein four blades form the corners of a square or rectangle with two of its sides in parallel to the rolls axis and the other two sides perpendicular to the rolls axis, i.e. in the production direction of the yarns or tapes, in a slanted pattern, wherein four blades form the corners of a parallogram or in a random pattern. The roll rotates such that the blades move in the same direction as the yarns or tapes. The rotational speed of the roll is relatively high such that the tangential speed at which the blades are displaced is equal to or higher than the production speed of the yarns or tapes. The rotational speed of the roll and the distribution of the blades per surface area determine the fibrillation pattern and also the appearance and mechanical properties of the fibrillated yarns or tapes.

Using a roller containing knives or blades instead of pins has the additional advantage of reducing the maintenance costs of the production equipment. Pins, which are mostly round, are relatively weak, because they are relatively thin, and need to be replaced frequently during production of fibrillated yarns or tapes. Knives and blades can be made from a more robust material, for example Tungsten or ceramics, and exhibit higher stiffness in the direction of loading, because the dimension of the knives or blades in the direction of loading is much larger than that of pins.

When the calendar rolls have a flat surface, yarns are obtained with a rectangular cross section which resembles the shape of tapes which are commonly used in artificial turf.

By modifying the basically flat surface of the calendar rolls almost any pattern can be given to the continuous sheet. A texturizing pattern can be added on one or both surfaces of the continuous sheet without introducing an additional calendaring step in the production process. Profiling patterns such as ridges can be formed onto or into one or both surfaces of the continuous sheet. These textures and profiles can vary both in length and cross direction of the continuous sheet by varying the patterns across the surface of one or both calendar rolls. Continuous sheets with almost random profiles can thus be produced. When the continuous sheet is cut into separate yarns, yarns can be obtained with varying size and/or shape of the cross sectional area along the length of the yarns. Alternatively, the yarns will exhibit a varying texture over the surface of the yarns.

The length direction of the continuous sheet is the production direction of the continuous sheet and the cross direction is the width direction of the continuous sheet. The width of the continuous sheet corresponds to the width of the calendar rolls.

When the profiled surface of the continuous sheet comprises for example continuous ridges running parallel to the direction along which the continuous sheet is cut into separate yarns, generally being the length direction of the continuous sheet, then the yarns will have a non-rectangular cross section, which can not be obtained by the prior art film extrusion process. When the ridges are added on one surface of the continuous sheet, yarns with an asymmetric cross section, for example a T-shaped cross section, can be obtained. Ridges along the length of the pile yarns can improve the stiffness of the piles and give a better visual appearance to imitate natural grass. When the ridges are added on both surfaces of the continuous sheet, yarns with a cross-shaped cross sectional area can be obtained when the ridges on both surfaces are added at the same location in the cross direction of the continuous sheet. By varying the location of the ridges and the number and shape of the ridges almost any imaginable cross sectional shape can be obtained in the yarns.

In particular the ridges added to the continuous sheet according to the invention can be instrumental to simulate the appearance of natural turf. When ridges are added to the continuous sheet running in parallel at regular intervals in the length direction of the continuous sheet, it can be easily assured that a yarn always contains a ridge, but at the same time it can be assured that the ridges will not always end up in the middle of the yarns but in varying positions when guiding of the continuous sheet is deliberately performed with sufficient tolerance. This will result in some bending of the yarns in random directions in the artificial turf and thus make it unnecessary to twist the yarns.

By varying the height of the ridges along the length direction of the continuous sheet the size and shape of the cross sectional can be varied along the length of the yarns.

Alternatively, the shape and size of the cross sectional area can be varied along the length of the yarns by changing the width of the ridges along the length direction of the continuous sheet. The shape and size of the cross sectional area of the yarns can also be varied by changing the shape of the ridges along the length direction of the continuous sheet. For example, the shape of the cross sectional area of the yarns can be varied by adding discontinuous ridges in the length direction to the surface of the continuous sheet.

The shape of the cross sectional area of the yarns can also be varied by adding ridges having a constant shape to the surface of the continuous sheet at an angle between 0° and 180° to the length direction of the continuous sheet as the sheet will generally be cut in the length direction to form separate yarns. The ridges will then not run in parallel along the length of the yarns.

Yarns which have a cross sectional area varying in size and/or shape along the length of the yarns can easily be made by adding ridges to the surface of the continuous sheet in a direction perpendicular to the direction along which the continuous sheet is cut into separate yarns, in general the ridges will then be added in the cross direction of the continuous sheet.

Preferably, the yarns cut from the continuous sheet are wound up on bobbins as continuous yarns, which enables the transportation of the yarn. The yarn can then, for example, be used in conventional processes to make pile fabrics. Pile fabrics are well known and can be used in carpets or artificial turf. Conventional processes to produce pile fabrics are for example tufting processes where tuft yarns are sewn through the backing layer, flocking processes where staple fibers are placed essentially perpendicular to the backing layer using electrostatic orientation of the fibers or ultrasonic bonding processes where generally tapes are bonded to the backing layer by ultrasonic welding. Other methods of bonding the yarns to the backing layer comprise thermal bonding and glueing processes.

The continuous sheet according to the invention can be deliberately stretched to obtain drawn yarns. When the continuous sheet has at least one profiled surface, yarns with a non-rectangular cross section or with a cross section which varies in shape and size along the length of the yarn can be obtained, which could not be produced with the prior art processes. Stretching of the continuous sheet can be performed directly after the polymer melt is pressed together by the calendar rolls to form a continuous sheet. Alternatively the continuous sheet is cooled down to ensure that the profiled surface has formed correctly and subsequently the profiled surface is drawn in a separate processing step.

However, it is also possible to cut the yarns to produce staple fibers of predefined length comprising non-drawn polymer. Such staple fibers can be used in flocking processes to produce pile fabrics, but these non-drawn staple fibers can also be used in a range of other applications, for example as reinforcement fibers in cement or in fiber reinforced plastics.

With this process also oriented staple fibers can be produced with a non-rectangular cross section or even with a cross section which varies in shape and size along the length of the staple fiber.

The non-drawn continuous sheet according to the invention can also be laminated to one or more additional continuous sheets prior to cutting the continuous sheet into separate yarns to produce yarns comprising different polymers. These additional continuous sheets can be an extruded sheet, a multi-layered coextruded sheet, a cast film, a melt calendared sheet, a blown film or a multi-layered blown film. Depending on the selected type of continuous sheet, the additional continuous sheet can be a non-drawn sheet, a drawn sheet, a bi-axially drawn sheet or an elastomeric sheet.

Yarns exhibiting two different colours can be formed when the non-drawn continuous sheet according to the invention is laminated to a continuous sheet having a different colour. Yarns having different colours are desirable to design artificial turf which better resembles natural turf. Alternatively, the continuous sheet can be dyed on one or both surfaces.

By lamination of an additional continuous sheet to the non-drawn continuous sheet according to the invention, yarns consisting of two polymers with different mechanical properties can be formed which can, for example, have a preferred direction of bending when the two polymers have different inherent stiffness.

The non-drawn continuous sheet according to the invention can be laminated to two other continuous sheets to form a three-layer laminate. For example, the two outer layers can be made of non-drawn continuous sheets according to the invention with low inherent stiffness, while the middle layer comprises material which is normally used in yarn production to obtain a softer artificial turf.

Any other functionality can be incorporated into the yarn by selecting the most suitable process to produce continuous layers for each material providing functionality. For example, an anti-static material can be used to avoid electrostatic charging of a carpet, a scent releasing material to mask unwanted odours, a phase change material to keep artificial turf cool on a hot summer day or to absorb heat generated by friction during sliding or any other material adding functionality to the pile fabric.

Alternatively, near infra-red (NIR) reflective material can be added to one or both outer layers to keep artificial turf cool, while the inner layer does not contain the NIR reflective material. In this way the amount of the NIR reflective material can be minimized without reducing functionality.

## Claims

1. A process for producing yarn out of a continuous sheet **characterised in that** a polymer melt is inserted between two calendar rolls, the polymer melt is pressed together by the calendar rolls to form a continuous sheet, the continuous sheet is cooled down and the continuous sheet is cut into separate yarns.

2. A process for producing yarn according to claim 1 **characterised in that** the polymer melt is cooled down by the calendar rolls to form a non-drawn continuous sheet and the non-drawn continuous sheet is cut into separate non-drawn yarns.

3. A process for producing yarn according to claim 2 **characterised in that** the calendar rolls are partially immersed in a cooling medium and wherein the polymer melt is cooled by the calendar rolls and by the cooling medium.

4. A process for producing yarn according to any of claims 1 to 3 **characterised in that** the continuous sheet is laminated to at least one additional continuous sheet prior to cutting the continuous sheet into separate yarns.

5. A process for producing yarn according to any of claims 1 to 4 **characterised in that** at least one calendar roll contains a profiling pattern to form a continuous sheet which has at least one profiled surface.

6. A process for producing yarn according to claim 5 **characterised in that** the profiled surface of the continuous sheet comprises ridges running parallel to the direction along which the continuous sheet is cut into separate yarns.

7. A process for producing yarn according to claim 5 **characterised in that** the profiled surface of the continuous sheet comprises ridges running at an angle between 0° and 180° to the direction along which the continuous sheet is cut into separate yarns.

8. A process for producing yarn according to any of claims 1 to 7 **characterised in that** the continuous sheet is drawn prior to cutting the continuous sheet into separate drawn yarns.

9. A yarn cut out of a continuous sheet **characterised in that** the yarn has a non-rectangular cross section.

10. A yarn according to claim 9 **characterised in that** the yarn has an asymmetric cross section.

11. A yarn cut out of a continuous sheet **characterised in that** the yarn has a cross section which varies in shape along the length of the yarn.

12. A yarn cut out of a continuous sheet **characterised in that** the yarn has a cross section which varies in size along the length of the yarn.

13. A yarn according to any of claims 9 to 12 **characterised in that** the yarn comprises drawn polymer.

14. A yarn cut out of a continuous sheet **characterised in that** the yarn comprises non-drawn polymer.

15. A yarn according to claim 14 **characterised in that** the yarn has a rectangular cross section.
